# EUROPEAN PATENT APPLICATION

(11) **EP 1 315 379 A2**
(43) Date of publication of application: **28.05.2003**
(21) Application number: 02257876.9
(22) Date of filing: 14.11.2002
(51) Int. Cl.: H04N 7/24, H04N 5/00

(54) **Providing and processing data for at least two versions of parts of a television programme**

(30) Priority: 14.11.2001 GB 0127478
(71) Applicant: Pace Micro Technology PLC, Saltaire, Shipley, BD14 3LF (GB)
(72) Inventor: Nooralahiyan, Amir, Pace Micro Technology Plc, Shipley, BD18 3LF (GB)
(74) Representative: Wood, Graham

(57) **Abstract**

The invention relates to the generation of video and audio in the form of a television programme by a broadcast data decoder. The data is transmitted by a broadcaster and at least part of the television programme can be selected to be generated in one of at least two versions. The data for the at least two versions is transmitted as part of a programme data stream and the data for the version which is selected to be viewed by the user is processed and that version shown on screen. The remainder of the programme is generated from a single version of data. It allows the user and/or broadcaster to determine what material is viewed by the user.

## Description

The invention to which this application relates is particularly, although not necessarily exclusively, to the provision of data from which video and audio can be generated to produce a television programme such as, for example, a movie which can be viewed via a television set connected to a broadcast data receiver.

The provision of digital data which is broadcast from a remote location and can be transmitted via any suitable system such as satellite, cable, or terrestrial digital data systems, is now well known. The systems typically comprise a broadcast medium for transferring data from a broadcaster to a number of remote locations and, at each remote location, there is provided a broadcast data receiver (BDR) which receives and processes the digital data to generate video and audio which, when shown in combination, form a television programme via a television set connected to, or in which the broadcast data receiver is provided.

The data is typically transmitted in a form which is compliant with the International standards set by MPEG (Motion Picture Experts Group) via a plurality of streams of data, each stream providing video and/or audio for a particular programme on a particular channel or alternatively the video and audio can be carried on different streams and "joined together" to form a television programme via the broadcast data receiver. The data is transmitted in a series of packets, each of said packets identifiable by the broadcast data receiver to allow the data to be processed and brought together to form a television programme for viewing by a user.

A specific problem to which this application relates is the provision of material which may have particular viewing ratings such as, for example, with a movie, the movie in its original form may have an X certification indicating that the subject matter is only suitable for adult viewing. In some instances, a television broadcaster can decide that the material may not be suitable for the broader range of viewers, and may therefore request or decide to show a version of the movie which has had material cut therefrom and/or material added into the same to make the movie more suitable for a wider range of viewers. While this may suit the broadcaster's requirements, many viewers feel aggrieved that the movie which they can watch via a television system, is not in the original format.

One solution is to broadcast two forms of the movie, the original version and the altered version and conventionally, this involves the broadcast of all the data for one version and the broadcast of all of the data for the entire content of the second version, even though there may only be relatively slight differences in the actual data content of the two versions. This requirement to broadcast two whole sets of data for the entire programme uses up valuable and limited data transmission capability and is therefore undesirable to the broadcaster to such an extent that the same is never or very rarely performed. Thus, in practice, the broadcaster is normally required to make a decision as to the acceptable content of the television programme and this is regarded by many as unfair intervention by the broadcaster, especially when the viewer is paying a subscription or a one-off fee for viewing the movie or other programme.

The aim of the present invention is therefore to provide more than one version of a particular television programme to a viewer to allow the viewer and/or broadcast data receiver to select the appropriate version to be shown on the television set and to provide said plurality of versions without unduly increasing the data transmission requirement in terms of increased bandwidth.

In a first aspect of the invention there is provided a digital data processing method for the generation of television programmes, said method including data transmitted from a broadcaster or other content provider to at least one remote location, a data decoder provided at the remote location for the reception and processing of the received transmitted data for display via display screen and speakers connected to the decoder and at least some of the said data relating to a particular television programme is transmitted and carried on a single programme data stream and characterised in that for selected programmes, said programme data stream includes data required for a first version of the television programme and, furthermore, data for at least a second version of at least part of said television programme and in accordance with viewer or broadcaster selection, said data for the first or second version is processed for the said part of the television programme to allow the required version of the said programme part to be displayed via the display screen and/or speakers.

Typically the data can be for video and/or audio reproduction and generically referred to as a television programme which can be any material viewed via a display screen.

In a first embodiment of the invention, the broadcaster or content provider, hereinafter referred to as broadcaster for ease of reference, identifies particular scenes in the said programme which are required to change according to which particular version of the programme is to be shown and, for the part or those parts of the programme, data for a first version is transmitted and data for a second version and possibly further versions is transmitted and a selection of the said first, second or further version which is to be generated for viewing is made at the MPEG decoder, such as a broadcast data receiver, which in turn processes the appropriate data for the selected version.

In one embodiment the data relates to or includes video data and data for first and second versions is transmitted to allow set of scenes for the first and second versions to be provided in the form of an associated group of pictures (GOPs) at the MPEG encoded level and, said group of pictures are subsequently parsed for a particular rating prior to the MPEG decoding at the broadcast data receiver, or other MPEG decoder consumer electronic devices such as a DVD player.

Typically, the parts for which the alternative versions are provided represent only a small percentage of the content of the television programme and so the only a small proportion of additional data needs to be provided for the first and second versions as the data for the majority of the programme only provides one version. Thus, by only providing the data for the first and second versions for the small part of the television programme so there is only a minimal increase in bandwidth requirements. Thus, the provision of the first and second versions of data for the portions of the programme which can be variable, between the first and second versions, means that the overall length of the programme will not be increased as the time represented by both sets of data can be the same so that the overall length of the programme remains the same regardless of which particular version is selected to be shown to the user.

The television programme represented by the data can be of any form but it is envisaged that the invention will be of particular use when the television programme is a movie, as it is with respect to movies that most alterations and changes are required for rating requirements.

In one example, a single movie can be transmitted in a single programme stream with multiple rating values, for example, parental guidance (PG) and adult rating (X rating). The two versions of the data for the Groups of Pictures (GOPs) required for the PG and X rated scenes for the movie are initially added to the content at the MPEG encoded stage and subsequently parsed by the invention at the de-coding stage at the broadcast data receiver. The rating selection mechanism which leads to the selection by the broadcast data receiver of the appropriate group of pictures to be shown can be set by the viewer via the broadcast data receiver in their premises, or alternatively, may be set by the broadcaster. . As mentioned above this is not limited to broadcast data receivers, and can equally apply to other MPEG decoder consumer electronic devices such as a DVD player.

The user may select in one embodiment, to select the version to be generated in terms of official rating values allocated to programmes or alternatively may be provided with other options offered by and supported by the broadcaster, such say for example, in terms of not watching versions including swearing, nudity, and so on. However as this will require some input from the broadcaster or content provider in terms of identifying the programmes and then annotating the same accordingly, it is likely that the official rating values allocated by censor authorities will be the most efficient selection system.

In one embodiment, in the programme stream, the information associated with each GOPs resides in the data_field. User_data in the stream is preceded by user_data_start code and is not restricted to a number of bytes and so can accommodate information on rating for different types of scenes. The broadcast data receiver (or other MPEG decoder consumer electronic devices) can extract this information from the incoming data stream for several classes of GOPs and upon establishing that the stream is dual or multi rated content, the decoder can start parsing alternate GOPs for the duration of the particular portion of the television programme to display a similar but differently rated version of the content.

Although reference is made above to the provision of two versions, it should be appreciated that multiple (>2) versions of a particular television programme can be generated as required by providing multiple alternative sets of GOPs as required for those parts which may be affected by different rating values and altered.

The invention can be implemented in software with negligible computational overhead and with small impact on the bandwidth overhead. The system can be provided as a user selective in the broadcast data receiver (or other MPEG decoder consumer electronic devices) and therefore it will be selectable to be used by the viewer, perhaps on a message appearing on their television screen to indicate that a particular programme has a dual rating and that the selection can be made.

In a further aspect of the invention there is provided a data processing system, said system including a means for transmitting a stream of data from a broadcaster and said data received by a broadcast data receiver, said BDR provided for the processing the received video and/or audio data and displaying the same via a display screen or speakers as appropriate to generate a television programme for viewing by a user of the system and characterised in that said data includes data required for a first version of at least part of the video and/or audio and data for at least a second version of at least part of the video and/or audio and selection of which of the first and second versions of data is processed by the BDR is made in accordance with predetermined user and/ or broadcaster preferences and comparison with the additional data identifying each of the versions of the data received by the BDR.

In a yet further aspect of the invention there is provided a digital data transmission system for the generation of television programmes, said system including data transmission from a broadcaster or other content provider to at least one remote location, an MPEG data decoder at the remote location for the reception and processing of the received data and generation of said data via a display screen and speakers connected thereto or provided therewith, and characterised in that said system includes the transmission of data for a particular programme on a single programme stream, said programme stream including the data required for a first version of the television programme and, furthermore, included in said stream, data for a second version of at least part of said programme and, when selected, said data for the first or second version is processed for the required part of the programme to allow the required version of said programme to be generated.

A specific embodiment of the invention will now be described with reference to the accompanying diagrams, wherein:-
Figure 1 illustrates an MPEG2 code which can be used in accordance with the invention;
Figure 2 illustrates the interaction of the main processes responsible for the input of data at the broadcast data receiver; and
Figure 3 illustrates utilisation of the invention to select a particular GOP to be shown.

One example of implementation referring to video data is herein described for descriptive purposes; however it should be noted that there are a number of possible methods by which implementation of the invention can be performed and that it can be performed to audio instead of or in addition to video data.

This invention can be implemented in the user_data defined in MPEG2 specification. With reference to ITU-T (H.262E) section 6.3.4/1 (User Data), the user_data_start_code is the bit string '000001B2' in hexadecimal. It identifies the beginning of user data. The user_data is defined as an 8-bit integer, an arbitrary number of which may follow one another. In the series of consecutive user_data bytes there shall not be a string of 23 or more consecutive zero bits. By treating the 8-bit integer as a code binary, a single word can provide 256 classifications of various contents. With reference to the above, section 6.2.2 (Video sequence), it is shown that user data can be defined for each group of pictures. This is what is required for the current invention to work (GOP by GOP).

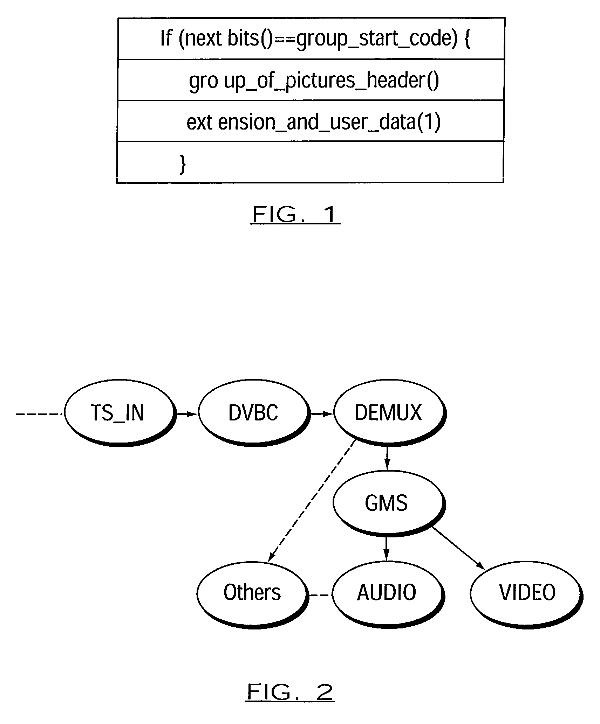

In many current implementations of Broadcast Data Receivers (or other MPEG decoder consumer electronic devices), the user_data fields are not utilised. The decoder simply skips this data. Extra information following the picture is extracted from the header FIFO by first reading one bit and if it is '1' then reading and discarding the next 8 bits which is the user_data byte as shown in Figure 1.

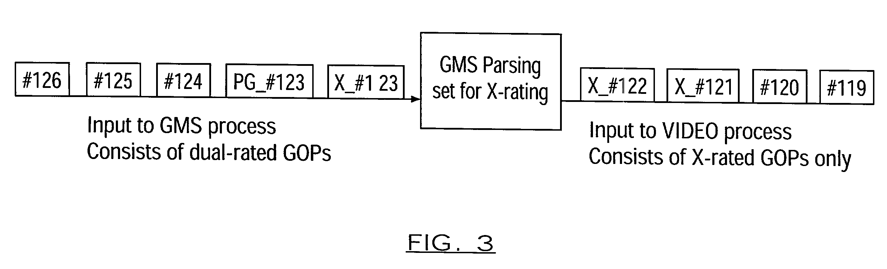

Figure 2 illustrates the basic interaction of the main process responsible for transport stream input (TS input), descrambling, (DVBC) de-multiplexing/routing (DEMUX) of the content and the invention of GOP Multiplexing and Splicing (GMS) by parsing prior to video/audio data decoding and other data processing tasks. The PES content is parsed all the way to picture_start_code until the GOP is identified where the PTS/DTS condition is verified.

Tasks are initialised at start-up and instantiated to run concurrently. Circular memory buffers are used for interprocess communication. The TS_IN process compares the Packet ID (PID) of the incoming Transport Packet with a PID Action Table to distinguish between packets to be routed and the packets to be rejected. TS_IN initially searches for PID 0, which contains Program Association Table (PAT). The DVBC process determines whether or not a packet needs unscrambling and if so and a valid key exists, the packets are decrypted and repacked before being passed on to the DEMUX process. The DEMUX process establishes the type of data payload by examining and extracting the relevant information from the PID table and routes it to the relevant process. In this example, as the data is video, it is routed to the VIDEO process and so on. VIDEO, AUDIO and other consumer processes provide simple interface to the device drivers.

In the implementation embodiment of this invention, the extra process (GMS) is placed between the DEMUX and the VIDEO/AUDIO process to parse the associated GOPs for rate selection to decode. In this implementation, while associated GOPs exist, the VIDEO and AUDIO process only receives packets from the GMS process and do not receive packets directly from the DEMUX process as is conventionally the case.

A producer pointer in the GMS process parses both associated GOPs for the first and second versions of the television data, but only the selected rated version enters the buffer of the consumer pointer, therefore only one of the two versions of GOPs (depending on user/operator choice) is actually decoded. The buffer is configured to be large enough to fully accommodate the first of the two associated GOPs plus the beginning of the second associated GOP. The minimum size of the VBV in MPEG is defined to be 1.835Mbits, however, this is not a major problem, for example in one implementation, this is normally software configurable on many platforms and can be increased if necessary.

Thus for the percentage of the data stream for a program where the invention is implemented by GOP Multiplexing and Splicing and the chosen rated GOPs are selected and passed to the VIDEO process as illustrated in Figure 3.

Initially, the single data stream service for the programme consists of a single rated content and the video GOPs with the sequence numbers........#118, #119, #120, are fed to the decoder. Then the stream contains two different rating versions for the GOPs for a given scene (PG_#121, PG_#122, PG_#123; X_#121, X_#122, X_#123).

In this example the GMS setting is for X-rated GOPs to be passed to the VIDEO process. Thus the GMS parsing ignores the associated PG-rated GOPs. Once the X version GOP's are completed the broadcast data receiver then returns to single GOP mode with the sequence number #124, #125, #126.

The invention of course can also be implemented on other MPEG compliant contents (data material) such as DVD titles.

GMS-enabled DVDs would select the desired rating in much the same way as described above.

The implementation described requires minimal software overhead with no extra hardware for the Broadcast Data receivers (or other MPEG decoder consumer electronic devices). Filtering consists of checking and translating the user_data information for each GOP category. Bandwidth overhead for implementing GMS is clearly dependent on the difference between the different ratings of the content, and how often they occur in the stream content. The increase in bandwidth due to the insertion of a user byte is insignificant. At its limit (i.e. per frame), the insertion of a user byte plus its 4-byte start code would result in a mere increase of 1Kbps (25f/s * 5 bytes=125Bytes/s).

The concept and mechanism for implementing the invention as outlined above is not limited to video contents only, it can also be applied to digital audio content, subtitles, or any other forms of data including content over Internet. For example for voice or subtitles, it is envisaged that GMS functionality could easily replace the sound or the word in much the same way.

The invention as described therefore includes the provision of additional (associated) GOPs for a given scene within a movie which have equal duration to the original GOPs for that scene in the content and this ensures the overall duration of the content is independent of the rating. The additional (associated) GOPs are provided within the same program service or Elementary Stream and are aligned at the encoding stage. The associated GOPs have twice the quantization level at the time of encoding (content management). DVDs are normally encoded at about 3Mbps. Most of the Satellite service is typically 4-5Mbps per service and the maximum quantization of associated GOPs is at MP@ML (15Mbps).

At the encoding stage, MPEG content management requires additional information insertion for processing. This may include information insertion in the following: sequence_headers, quantization_, matrix management, and extension_user_data. These fields are already defined in the MPEG specification.

Compressed bit buffer management requires off-line content processing and management before distribution or broadcast. Therefore, current "on-line" encoding techniques, currently implemented by some service providers will not be applicable. However, the trend for content storage, management and distribution is likely to change to off-line encoding. Currently some service providers/operators keep original tape content on video servers that requires real-time MPEG encoding and mixing prior to transmission. For this reason, the proposed technique may be best suited for off-line processing during MPEG encode, whereby the content provider creates two associated GOPs and manages the overall quantization (bit rate) at GOP level. Having said that, we can not rule out future approach to content management by the broadcaster whereby, the MPEG encoding with the required quantization at GOP level is carried out off-line, followed by a subsequent recording on hard drives prior to broadcast. This is a much more efficient approach to content management, especially for repeated delayed broadcast of movies.

The invention of the application is therefore an innovative concept that provides flexibility and choice to the user for watching different versions of the content delivered for a single program. The steps to implement this invention are compliant with the MPEG standard and adds value and novel functionality to digital Broadcast Data Receivers and iDTVs. Furthermore, the invention can be easily implemented in software with minimal computational overhead or increased bandwidth. In practical terms the existing broadcast data receivers currently in use can benefit from this invention by program download and provides the viewer with greater control resulting in wider viewing audience and user interactivity.

## Claims

1. A digital data processing method for the generation of television programmes, said method including data transmitted from a broadcaster or other content provider to at least one remote location, a data decoder provided at the remote location for the reception and processing of the received transmitted data for display via display screen and speakers connected to the decoder and at least some of the said data relating to a particular television programme is transmitted and carried on a single programme data stream and **characterised in that** for selected programmes, said programme data stream includes data required for a first version of the television programme and, furthermore, data for at least a second version of at least part of said television programme and in accordance with viewer or broadcaster selection, said data for the first or second version is processed for the said part of the television programme to allow the required version of the said programme part to be displayed via the display screen and/or speakers.

2. A digital data transmission method in accordance with claim 1 **characterised in that** the data received for the programme is for video and/or audio reproduction and is referred to as a television programme.

3. A method according to claim 1 **characterised in that** the broadcaster or content provider identifies particular parts in the said television programme which can change according to which particular version of the television programme is to be shown and for the part or those parts, data for a first version is transmitted and data for at least a second version is transmitted and a selection of which of the said first or second, or further, versions is to be generated for display is made at the MPEG decoder.

4. A method according to claim 1 **characterised in that** the data is video data and video data for first and second versions is transmitted to allow a set of video scenes for the first and second versions respectively to be provided for selected viewing.

5. A method according to any of the preceding claims **characterised in that** the data and data decoder comply with MPEG data format and processing standards.

6. A method according to claim 4 **characterised in that** the video data for each version is provided in respective associated group of pictures (GOP) at an MPEG encoded level.

7. A method according to claim 6 **characterised in that** said group of pictures are subsequently parsed for a particular rating value input by the broadcaster of the data prior to the MPEG decoding.

8. A method according to claim 1 **characterised in that** those parts of the television programme without first and second versions of data are generated in a conventional manner.

9. A method according to any of the preceding claims **characterised in that** the programme is transmitted in a single programme stream and includes data relating to multiple rating values each allocated to a version of data for part of said programme.

10. A method according to claim 9 **characterised in that** the particular programme part version selected and processed by the decoder is in response to a user selected rating value and the data used for the generation of that version is that version which has a rating which matches or does not exceed the user selected rating value.

11. A method according to claim 10 **characterised in that** information associated with the data for each version resides in the user_data_field of the transmitted data.

12. A method according to claim 11 **characterised in that** user_data in the stream is preceded by a user_data_start code.

13. A method according to any of the preceding claims **characterised in that** the decoder is provided as part of a broadcast data receiver (BDR) provided in connection with or as part of a television set.

14. A method according to any of the preceding claims **characterised in that** the television programme any of a live broadcast, a pre recorded programme or movie.

15. A data processing system, said system including a means for transmitting a stream of data from a broadcaster and said data received by a broadcast data receiver, said BDR provided for the processing the received video and/or audio data and displaying the same via a display screen or speakers as appropriate to generate a television programme for viewing by a user of the system and **characterised in that** said data includes data required for a first version of at least part of the video and/or audio and data for at least a second version of at least part of the video and/or audio and selection of which of the first and second versions of data is processed by the BDR is made in accordance with predetermined user and/ or broadcaster preferences and comparison with the additional data identifying each of the versions of the data received by the BDR.

16. A digital data transmission system for the generation of television programmes, said system including data transmission from a broadcaster or other content provider to at least one remote location, an MPEG data decoder at the remote location for the reception and processing of the received data and generation of said data via display screen and speakers connected thereto or provided therewith, and **characterised in that** the said system includes transmission of data for a particular programme on a single programme stream, said programme stream including the data required for a first version of the television programme and, furthermore, included in said stream, data for a second version of at least part of said programme and, when selected, said data for the first or second version is processed for the required part of said programme to allow the required version of the said programme to be generated.
